# EUROPÄISCHE PATENTANMELDUNG

(11) **EP 4 553 355 A1**
(43) Veröffentlichungstag der Anmeldung: **14.05.2025**
(21) Anmeldenummer: 23208339.4
(22) Anmeldetag: 07.11.2023
(51) Int. Cl.: F16K 17/16, A62C 4/00, B65D 90/36, F16K 17/40

(54) **VORRICHTUNG ZUR EXPLOSIONSDRUCKENTLASTUNG**

(71) Anmelder: Rembe GmbH Safety + Control, 59929 Brilon (DE)
(72) Erfinder: Penno, Stefan, 59929 Brilon (DE); Saling, Carlo, 65582 Aull (DE); Bunse, Roland, 59929 Brilon (DE)
(74) Vertreter: Schäperklaus, Jochen

(57) **Zusammenfassung**

Die Erfindung betrifft eine Vorrichtung (1) zur Explosionsdruckentlastung eines Behälters, eines Gehäuses, einer Einhausung, einer Leitung oder ähnlichem, in dem oder der ein explosionsfähiges Gemisch, insbesondere eine explosionsfähige Atmosphäre vorliegt oder entstehen kann,
- mit einer Flammendurchschlagsicherung (11) und
- mit einer Berstscheibe (12),
- wobei die Berstscheibe (12) in der Richtung, in der im Fall einer Druckentlastung Gase durch die Vorrichtung hindurchtreten, hinter der Flammendurchschlagsicherung (11) angeordnet ist.

## Beschreibung

Die vorliegende Erfindung betrifft eine Vorrichtung zur Explosionsdruckentlastung eines Behälters, eines Gehäuses, einer Einhausung, einer Leitung oder ähnlichem, in dem oder der ein explosionsfähiges Gemisch, insbesondere eine explosionsfähige Atmosphäre vorliegt oder entstehen kann.

In Behältern, Gehäusen, Einhausungen, zum Beispiel von Produktionsanlagen, Leitungen oder anderem können während einer Lagerung oder Herstellung von Gütern explosionsfähige Gemische vorliegen oder entstehen. Es kann sein, dass es gewollt ist, dass das Gemisch entsteht, es kann aber auch sein, dass das Gemisch aufgrund eines Fehlers oder zufällig entsteht.

Ungewollt kann es zu einer Zündung des Gemisches kommen. Der Behälter, das Gehäuse, die Einhausung, die Leitung etc. werden dann explodieren. Eine solche Explosion kann verheerende Personen- und Sachschäden nach sich ziehen. In der Folge kann es zu gravierenden Produktionsausfällen kommen. Um solche Schäden und Produktionsausfälle zu minimieren, sind Vorrichtungen zur Explosionsdruckentlastung sinnvoll und zum Teil auch vorgeschrieben.

Die Anmelderin stellt unter anderem unter den Bezeichnungen "Q-Rohr" und "Q-Box" Vorrichtungen zur Explosionsdruckentlastung her. Die Vorrichtung wird auf eine Öffnung in dem abzusichernden Gegenstand bzw. der abzusichernden Einrichtung aufgesetzt. Die Berstscheibe der Vorrichtungen zur Explosionsdruckentlastung verschließt diese Öffnung. Im Falle eines Druckanstiegs in dem abzusichernden Gegenstand bzw. der abzusichernden Einrichtung, zum Beispiel aufgrund einer Explosion öffnet die Berstscheibe und gibt die Öffnung frei, durch die dann Gase aus dem abzusichernden Gegenstand bzw. der abzusichernden Einrichtung austreten können. An die Berstscheibe schließt sich bei dem Q-Rohr oder der Q-Box die Flammendurchschlagsicherung an. Diese besteht aus mehreren Lagen eines Edelstahlgestricks, die von einem Käfig gehalten werden. Der Käfig, durch den die Lagen des Edelstahlgestricks der Flammendurchschlagsicherung und die Lagen des Edelstahlgestricks gehalten werden, und die Berstscheibe schließen einen Raum ein, in den die Berstscheibe öffnet.

Die Anordnung der Flammendurchschlagsicherung im Strömungsweg hinter der Berstscheibe hat sich in der Vergangenheit aus mehreren Gründen bewährt. So kann zum einen die Flammendurchschlagsicherung von in dem abzusichernden Gegenstand bzw. der abzusichernden Einrichtung vorhandenen Stoffen, insbesondere Stäuben nicht verunreinigt werden. Die hinter der Berstscheibe angeordnete Flammendurchschlagsicherung kann so gestaltet sein, dass sie eine große Entlastungsöffnung bietet. Die Entlastungsöffnung der Flammendurchschlagsicherung kann insbesondere deutlich größer sein als die Entlastungsöffnung der geöffneten Berstscheibe, wodurch die Strömungsgeschwindigkeiten der Gase durch die Flammendurchschlagsicherung geringer sein können als die Strömungsgeschwindigkeiten im Bereich der Berstscheibe, was die Abkühlung der heißen Gase und das Verlöschen der Flammen vereinfacht.

Ein Nachteil des bekannten Q-Rohrs und der bekannten Q-Box ist jedoch, dass sie aufgrund der großvolumigen Flammendurchschlagsicherung einen großen Platzbedarf haben. Außerdem kann in einer schmutzanfälligen Umgebung Schmutz in die Flammendurchschlagsicherung eindringen und dadurch deren Funktion beeinträchtigen.

### Hier setzt die Erfindung an.

Der Erfindung liegt die Aufgabe zugrunde, eine Vorrichtung zur Explosionsdruckentlastungsvorrichtung vorzuschlagen, bei der eine Verunreinigung der Flammendurchschlagsicherung von außen nicht möglich ist und die einen geringeren Platzbedarf hat, als das bekannte Q-Rohr und die bekannte Q-Box.

Diese Aufgabe wird erfindungsgemäß dadurch gelöst, dass die Berstscheibe in der Richtung, in der im Fall einer Druckentlastung Gase durch die Vorrichtung hindurchtreten, hinter der Flammendurchschlagsicherung angeordnet ist.

Damit ist die Flammendurchschlagsicherung durch die Berstscheibe vor äußeren Einflüssen geschützt. Die Flammendurchschlagsicherung der erfindungsgemäßen Vorrichtung ist allerdings nicht in Richtung des abzusichernden Volumens vor Einflüssen der dort stattfindenden Prozesse geschützt. Da aber manche Prozesse zu keiner Verschmutzung der innenliegenden Flammendurchschlagsicherung führen, ist das kein Problem, das in jedem Anwendungsfall entstehen kann. Es gibt also Prozesse bzw. Anwendungen, in denen eine in der Entlastungsrichtung vor der Berstscheibe angeordnete Flammendurchschlagsicherung nicht verschmutzen kann. Bei wieder anderen Anwendungen tritt allenfalls eine geringe Verschmutzung auf, die hingenommen werden kann. Und bei wieder anderen Anwendungen kann die Flammendurchschlagsicherung durch eine nicht druckfeste Abdeckung geschützt sein, zum Beispiel durch eine Folie.

Die erfindungsgemäße Vorrichtung ist auch nicht so großvolumig wie die bekannte Q-Box oder das bekannte Q-Rohr. Das gilt insbesondere in den Fällen, in denen die Flammendurchschlagsicherung im Wesentlichen einen quaderförmigen Block bildet, der im Wesentlichen parallel zu der Berstscheibe angeordnet ist. Der Abstand zwischen der Flammendurchschlagsicherung und der Berstscheibe kann dann im Vergleich zu dem Abstand bei einem Q-Rohr oder einer Q-Box kleiner sein. Zwar ist dann die durchströmbare Fläche der Flammendurchschlagsicherung im Vergleich zur Berstscheibe kleiner als bei der Q-Box oder dem Q-Rohr, durch eine entsprechende Auslegung der Entlastungsfläche der Berstscheibe und der Flammendurchschlagsicherung kann aber für ausreichende Strömungsgeschwindigkeiten im Entlastungsfall gesorgt werden.

Es ist nach der Erfindung aber auch möglich, dass die Flammendurchschlagsicherung entgegen der Richtung ausgeformt, zum Beispiel gewölbt ist, in der im Fall einer Druckentlastung Gase durch die Vorrichtung hindurchtreten. Im Unterschied zu einer flachen Ausformung der Flammendurchschlagsicherung kann die Flammendurchschlagsicherung dann eine größere durchströmbare Fläche haben. Da die Berstscheibe in der Regel in der Ebene der Außenwand des abzusichernden Behälters, des abzusichernden Gehäuses, der abzusichernden Einhausung, der abzusichernden Leitung oder ähnlichem angeordnet ist, ragt die Flammendurchschlagsicherung dann nach innen und nicht außen über die Außenwand hinaus. Dadurch kann der zu schützende Behälter, das zu schützende Gehäuse, die zu schützende Einhausung, die zu schützende Leitung oder ähnliches kompakter gestaltet sein.

Gemäß der Erfindung kann die Flammendurchschlagsicherung eine oder mehrere Lagen aus einem Gestrick, Gewebe oder ähnliches aufweisen, das aus einem Material hergestellt ist, das Wärme gut aufnehmen kann, zum Beispiel Edelstahlfäden. Die Lage oder die Lagen können von einem Rahmen eingefasst sein. Die Lage oder die Lagen können durch den Rahmen gehalten sein. Der Rahmen kann aus einem oder mehreren Abschnitten mit einem C-förmigen Profil gebildet sein. Ein Rand der einen oder mehreren Lagen kann von dem Abschnitt oder den Abschnitten mit dem C-förmigen Profil eingefasst sein. Schenkel des C-förmigen Profils können an einer Oberseite und einer Unterseite der Lage bzw. der Lagen anliegen.

Die Flammendurchschlagssicherung kann im Bereich des Randes mehrere Durchgangslöcher aufweisen. Durch diese Durchgangslöcher können Schrauben oder andere Befestigungsmittel geführt sein, mit denen die Flammendurchschlagsicherung an dem Rand der Entlastungsöffnung in dem abzusichernden Gegenstand bzw. der abzusichernden Einrichtung so befestigt werden kann, dass die Lage oder die Lagen die Entlastungsöffnung in dem abzusichernden Gegenstand bzw. der abzusichernden Einrichtung abdecken. Die Durchgangslöcher können in dem oberen Schenkel des C-Profils, in dem unteren Schenkel des C-Profils und in der Lage bzw. den Lagen vorgesehen sein. In die Durchgangslöcher in der Lage bzw. den Lagen können Hülsen eingesetzt sein, die einerseits mit dem oberen Schenkel und andererseits mit dem unteren Schenkel des C-Profils verbunden sind. Dadurch, dass die Hülsen die Durchgangslöcher in der Lage bzw. den Lagen durchgreifen, sind der Rahmen und die Lage bzw. die Lagen miteinander verbunden. Die Lage ist bzw. die Lagen sind dadurch in dem Rahmen mehr oder weniger locker gespannt gehalten und können nicht aus dem Rahmen herausfallen.

Gehäuse von Maschinen oder Einhausungen von Produktionsanlagen dienen oft dem Schutz der Umgebung vor Schallemissionen. Der in der der Maschine oder der Produktionsanlage entstehende Schall wird durch das Gehäuse oder die Einhausung an einer Ausbreitung gehindert. Dazu sind die Gehäuse und Einhausungen oft entsprechend gestaltet. Sie können mehrschalige Wände sein oder Wände mit einer Schallisolierung aufweisen, die die Ausbreitung des Schalls verhindert.

Einen Schwachpunkt in den Schallschutzkonzepten solcher Gehäuse oder Einhausungen bilden oft Vorrichtungen zur Explosionsdruckentlastung. Diese Vorrichtungen weisen oft Gewebe als Flammendurchschlagsicherung und Berstscheiben auf, die bei einem Druckanstieg in dem Gehäuse oder der Einhausung öffnen, so dass ein Explosionsdruck abgebaut werden kann, ohne dass das Gehäuse oder die Einhausung auseinanderfliegt. Durch die Flammendurchschlagsicherung wird verhindert, dass Flammen aus dem Gehäuse oder der Einhausung austreten. Weder die Berstscheibe noch die Flammendurchschlagsicherung sind dazu ausgelegt, die Umgebung vor Schallemissionen zu schützen. Der Schall kann daher an solchen Vorrichtungen austreten und zu ungewollten Belastungen der Umgebung mit Schall führen.

Auch hier setzt die vorliegende Erfindung an.

Eine erfindungsgemäße Vorrichtung zur Explosionsdruckentlastung soll also so verbessert werden, dass diese einen verbesserten Schallschutz bietet.

Bei einer Variante der Erfindung kann an der Berstscheibe der Vorrichtung zur Explosionsdruckentlastung auf einer der Flammendurchschlagsicherung zugewandten Seite oder einer der Flammendurchschlagsicherung abgewandten Seite wenigstens eine Schicht aus einem schalldämmenden Dämmstoff angeordnet ist.

Bei dem Dämmstoff kann es sich im Grunde um jeden für eine Schalldämmung geeigneten Stoff handeln. Besonders geeignet ist ein Dämmstoff, der zumindest normal entflammbar ist, verformbar oder flexibel ist, eine hohe Beständigkeit gegen Umwelteinflüsse wie zum Beispiel Sonneneinstrahlung oder Wärme hat, wenig oder keine Flüssigkeiten aufnimmt und/oder geschlossenzellig ist. Es kann sich bei dem Dämmstoff um einen PU-Schaum, einen Silikonschaum oder einen Dämmstoff auf EPDM-Basis handeln.

Sind zur Schalldämmung mehrere Schichten vorgesehen, können die Schichten aus gleichen oder verschiedenen Dämmstoffen bestehen.

Die Verformbarkeit des Dämmstoffes oder der Dämmstoffe ist insbesondere dann vorteilhaft, wenn die Schichten fest mit der Berstscheibe verbunden sind und damit beim Bersten der Berstscheibe zusammen mit der Berstscheibe verformt werden.

Vorzugsweise hat der Dämmstoff eine geringe Zugfestigkeit, insbesondere in den Bereichen, in denen die Sollbruchlinien der Berstscheibe vorgesehen sind, so dass er beim Bersten der Berstscheibe schnell reißen kann. Dadurch kann verhindert werden, dass ein Bersten der Berstscheibe durch den Dämmstoff verhindert oder verzögert wird. Auch der Dämmstoff kann Sollbruchlinien aufweisen.

Ist der Dämmstoff auf der der Flammendurchschlagsicherung zugewandten Seite der Berstscheibe angeordnet, ist vorzugweise zwischen einem für die Befestigung der Berstscheibe vorgesehenen Rand der Berstscheibe und der Flammendurchschlagsicherung ein Abstandhalter vorgesehen, der zwischen der Berstscheibe und der Flammendurchschlagsicherung einen Abstand einstellt, der der Dicke der Schicht oder der Schichten aus dem Dämmstoff entspricht. Durch den Abstandhalter ist dann zwischen der Flammendurchschlagsicherung und der Berstscheibe ein Raum geschaffen, der von der Schicht oder den Schichten des Dämmstoffes oder der Dämmstoffe ausgefüllt ist.

Der Abstandhalter kann ein Rahmen sein, der ein nach außen geöffnetes C-förmiges Profil haben kann.

Die Berstscheibe kann alle Merkmale haben, die eine in der europäischen Patentanmeldung 23178734.2 als Erfindung beschriebene Berstscheibe haben kann. Die Berstscheibe einer erfindungsgemäßen Vorrichtung kann rund oder rechteckig sein.

Weitere Merkmale und Vorteile eines Ausführungsbeispiels der Erfindung sind unter Bezugnahme auf die Zeichnungen nachfolgend beschrieben. Es zeigen:
- Fig. 1: eine zum Teil ausgebrochene perspektivische Darstellung des Ausführungsbeispiel, das an einer Wand eines Behälters montiert ist,

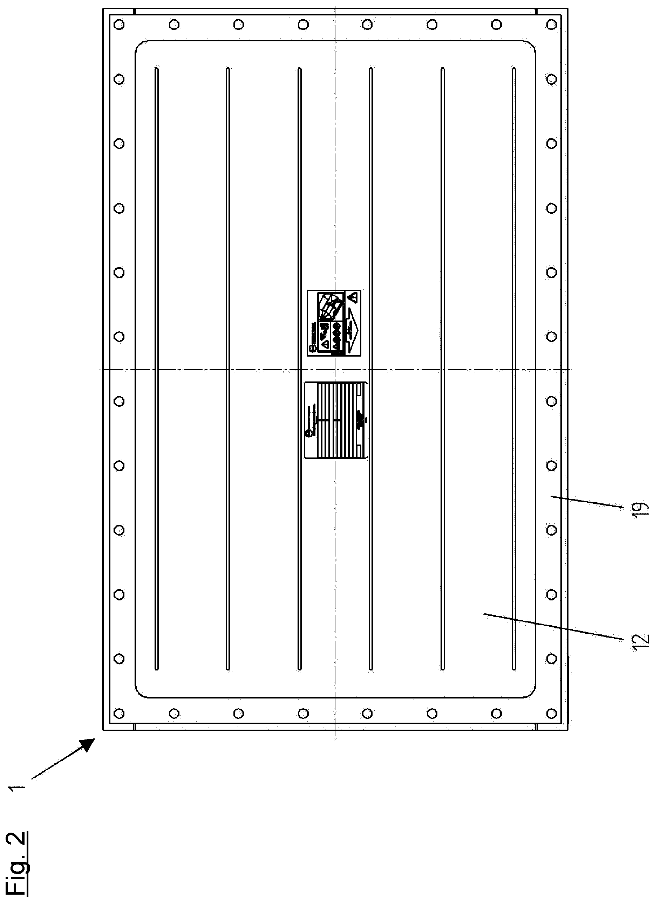

- Fig. 2: eine Draufsicht auf das Ausführungsbeispiels und
- Fig. 3: einen Teilschnitt durch die in der Fig. 1 dargestellten Anordnung aus dem an der Behälterwand monierten Ausführungsbeispiel und der Behälterwand.

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale des nachfolgend beschriebenen Ausführungsbeispiels aufweist.

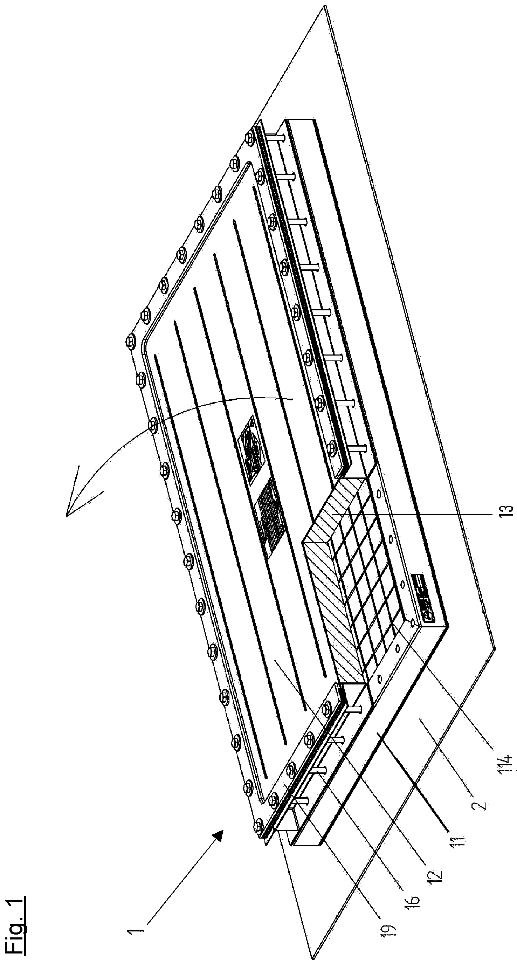

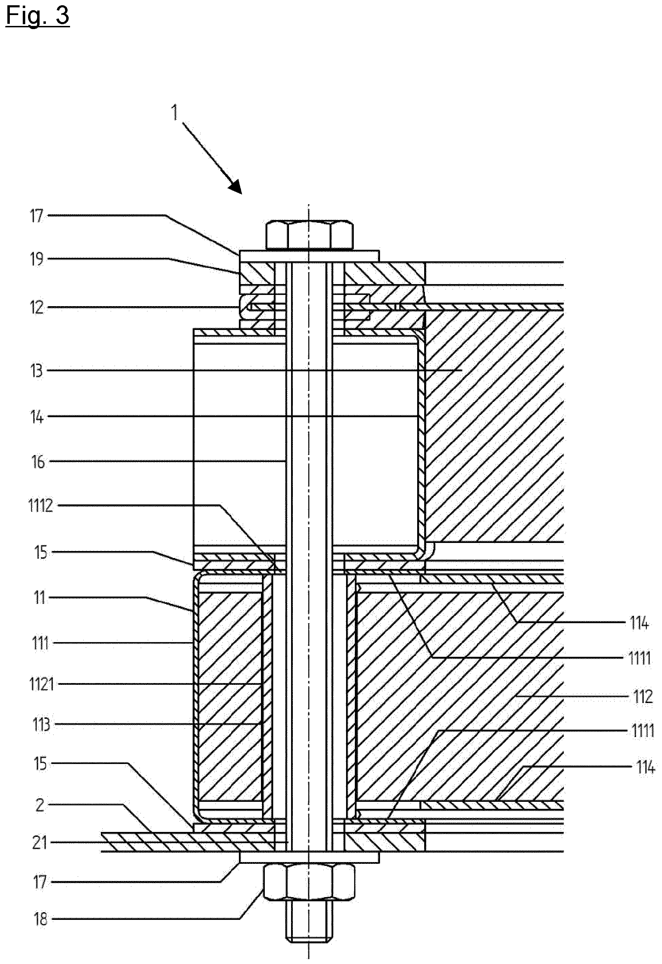

Das in den Figuren dargestellte Ausführungsbeispiel einer erfindungsgemäßen Vorrichtung 1 zur Explosionsdruckentlastung eines Behälters weist eine Flammendurchschlagsicherung 11, eine Berstscheibe 12, einen schalldämmenden Dämmstoff 13, einen Abstandhalter 14, Dichtungen 15, Schrauben 16, Unterlegscheiben 17, Muttern 18 und einen Konterrahmen 19 auf. Die Vorrichtung 1 ist in den Darstellungen der Figuren 1 und 3 an einer Wand 2 des Behälters montiert, der durch die Vorrichtung 1 gegen eine unkontrollierte Explosion geschützt ist. Die Vorrichtung 1 deckt dabei eine Entlastungsöffnung in der Wand 2 des Behälters ab und verschließt diese.

In einem Rand der Entlastungsöffnung in der Wand 2 des Behälters sind Durchgangslöcher 21 vorgesehen, die für die Befestigung der Vorrichtung 1 an der Wand genutzt werden.

Auf den Rand der Öffnung in der Wand 2 des Behälters ist eine um die Öffnung laufende Dichtung 15 aufgelegt. Auf dieser Dichtung 15 ist die Flammendurchschlagsicherung 11 angeordnet.

Die Flammendurchschlagsicherung 11 weist einen rechteckigen Rahmen 111 und mehrere Lagen 112 eines Gestricks aus Edelstahlfäden oder -drähten auf. Der Rahmen 111 läuft um die Entlastungsöffnung in der Wand 2 des Behälters und ist aus mehreren Abschnitten mit einem C-förmigen Profil zusammengesetzt. Schenkel 1111 des Profils weisen nach innen.

Die Lagen 112, die in der Fig. 3 nicht im Einzelnen, sondern nur als ein Block dargestellt sind, sind auf ihrer dem Inneren des Behälters zugewandten Seite und der dem Behälter abgewandten Seite von einem weitmaschigen Drahtgitter 114 abgedeckt, welches ein Durchhängen der Lagen bei einer waagerechten Anordnung oder ein seitliches Ausweichen der Lagen bei einer senkrechten Anordnung verhindern.

In den Schenkeln 1111 des Rahmens 111 und in den Lagen 112 sind fluchtend zu den Löchern 21 in der Wand des Behälters ebenfalls Durchgangslöcher 1112, 1121 vorgesehen. In diese Durchgangslöcher 1112, 1121 ist je eine Hülse 113 eingesetzt. Diese Hülsen 113 können mit den Schenkeln 1111 des Rahmens 111 verbunden sein, zum Beispiel durch Formschluss und/oder durch Schweißen. Insbesondere wenn die Hülsen 113 mit den Schenkeln 1111 verbunden sind, sind auch die Lagen 112 des Gestricks fest mit dem Rahmen 111 verbunden.

Durch jede der in die Durchgangslöcher 1112, 1121 eingesetzten Hülse 113 kann eine Schraube 16 zur Befestigung der Vorrichtung 1 an der Wand 2 hindurchgeführt sein, was noch näher erläutert werden wird.

Auf den Schenkel 1111 auf der von dem Behälter abgewandten Seite des Rahmens 111 der Flammendurchschlagsicherung 11 ist eine weitere Dichtung 15 aufgelegt, die identisch zu der Dichtung 15 sein kann, die zwischen der Flammendurchschlagsicherung 11 und der Wand 2 angeordnet ist. An diese weitere Dichtung 15 schließt sich der Abstandhalter 14 an. Der Abstandhalter 14 ist aus einem Rahmen gebildet, der aus Abschnitten mit einem C-Profil zusammengesetzt ist. Anders als bei dem Rahmen 111 der Flammendurchschlagsicherung 11 sind die Schenkel 141 des Abstandhalters 14 nach außen gerichtet. Die Schenkel 141 weisen Durchgangslöcher auf, die mit den Durchgangslöchern im Rand der Wand 2 und den Durchgangslöchern in der Flammendurchschlagsicherung 11 fluchten.

Auf den Abstandhalter 14 ist die Berstscheibe 12 aufgelegt. Diese weist einen Rahmen 121 und ein Dichtteil 122 auf. Der Rahmen 121 der Berstscheibe 12 ist aus Abschnitten von um 180° umgekanteten Blechstreifen hergestellt, die auf den Rand des Dichtteils 122 aufgesteckt sind. Das Dichtteil ist ein im Wesentlichen rechteckiger besonders hergerichteter Blechzuschnitt, der im Normalbetrieb des Behälters die Entlastungsöffnung des Behälters verschließt. Sowohl in dem Rahmen 121 als auch im Rand des Dichtteils 122 sind zu den Löchern in der Wand 2 fluchtende Durchgangslöcher vorgesehen.

Auf dem Rahmen der Berstscheibe 12 ist der Konterrahmen 19 aufgelegt. Dieser ist aus Abschnitten mit einem rechteckigen Profil hergestellt. Er weist Durchgangslöcher auf, die mit den Durchgangslöchern in der Wand 2, in der Berstscheibe 12, dem Abstandhalter 14 und der Flammendurchschlagsicherung 11 fluchten.

Durch diese fluchtenden Durchgangslöcher sind die Schrauben 16 hindurchgesteckt, die auf der Innenseite der Wand 2 mit Muttern 18 gesichert sind. Zwischen Köpfen der Schrauben 16 und dem Konterrahmen 19 sowie zwischen den Muttern 18 und der Wand 2 sind Unterlegscheiben 17 vorgesehen. So ist die Vorrichtung 1 an der Wand befestigt.

Auf der der Flammendurchschlagsicherung 11 zugewandten Seite des Dichtteils 122 der Berstscheibe 12 ist die schalldämmende Dämmstoffschicht 13 befestigt. Sie kann an diese Seite des Dichtteils 122 angeklebt sein. Der Dämmstoff ist ein verformbarer, geschlossenzelliger Kunststoff. Die Stärke der Schicht 13 ist so gewählt, dass sie sich nahezu über die gesamte Höhe des Abstandhalters 14 erstreckt. Die Schicht 13 füllt bei dem dargestellten Ausführungsbeispiel den Raum innerhalb des Abstandhalters 14 völlig aus. Es ist aber auch möglich, dass die Schicht 13 nicht über die gesamte Schichtdicke an dem Abstandhalter anliegt. Das kann das Öffnen der Berstscheibe in einem Entlastungsfall erleichtern. Es ist möglich, dass zwischen der Schicht 13 und dem Abstandhalter 14 ein in Richtung zur Flammendurchschlagsicherung 11 weiter werdender Spalt vorgesehen ist.

Steigt der Druck in dem Behälter über den Berstdruck der Berstscheiben an, öffnet die Berstscheibe 12 und der in dem Behälter herrschende Druck kann durch Ausströmen des in dem Behälter vorliegenden Mediums entlastet werden. Ist der hohe Druck in dem Behälter aufgrund einer Explosion entstanden, werden Flammen der Explosion durch die Flammendurchschlagsicherung gelöscht und die nicht brennenden und abgekühlten Gase können durch die geöffnete Berstscheibe austreten.

Wenn dagegen der Druck unter dem Berstdruck ist und die Berstscheibe nicht geöffnet ist, schirmen der Behälter und das schallgedämmte Dichtteil 112 in dem Behälter entstehende Schallwellen ab und verhindern so, dass Lärm aus dem Behälter nach außen dringt.

Die Vorrichtung 1 nimmt im Vergleich zu bekannten Lösungen wenig Platz ein und ist für viele Anwendungen ebenso oder besser geeignet als das bekannte Q-Rohr oder die bekannte Q-Box. Für andere Anwendungen hingegen sind die bekannten Lösungen besser geeignet.

## Patentansprüche

1. Vorrichtung (1) zur Explosionsdruckentlastung eines Behälters, eines Gehäuses, einer Einhausung, einer Leitung oder ähnlichem, in dem oder der ein explosionsfähiges Gemisch, insbesondere eine explosionsfähige Atmosphäre vorliegt oder entstehen kann,
- mit einer Flammendurchschlagsicherung (11) und
- mit einer Berstscheibe (12),
**dadurch gekennzeichnet, dass**
die Berstscheibe (12) in der Richtung, in der im Fall einer Druckentlastung Gase durch die Vorrichtung hindurchtreten, hinter der Flammendurchschlagsicherung (11) angeordnet ist.

2. Vorrichtung (1) nach Anspruch 1, **dadurch gekennzeichnet, dass** die Flammendurchschlagsicherung (11) im Wesentlichen durch einen quaderförmigen Block gebildet ist, der im Wesentlichen parallel zu der Berstscheibe (12) angeordnet ist.

3. Vorrichtung (1) nach Anspruch 1 oder 2, **dadurch gekennzeichnet, dass** die Flammendurchschlagsicherung (11) eine oder mehrere Lagen (112) aus einem Gestrick, Gewebe oder ähnliches aufweist.

4. Vorrichtung nach Anspruch 3, **dadurch gekennzeichnet, dass** die Lage (112) der Flammendurchschlagsicherung (11) von einem Rahmen (111) der Flammendurchschlagsicherung (11) eingefasst ist oder die Lagen (112) der Flammendurchschlagsicherung (11) von einem Rahmen (111) der Flammendurchschlagsicherung (11) eingefasst sind.

5. Vorrichtung (1) nach Anspruch 3 oder 4, **dadurch gekennzeichnet, dass** die Lage oder die Lagen (112) durch den Rahmen (111) gehalten ist bzw. sind.

6. Vorrichtung (1) nach einem der Ansprüche 3 bis 5, **dadurch gekennzeichnet, dass** der Rahmen (111) aus einem oder mehreren Abschnitten mit einem C-förmigen Profil gebildet ist.

7. Vorrichtung (1) nach einem der Ansprüche 1 bis 6, **dadurch gekennzeichnet, dass** die Flammendurchschlagssicherung (11) im Bereich des Randes mehrere Durchgangslöcher (1112, 1121) aufweist.

8. Vorrichtung (1) nach einem der Ansprüche 1 bis 7, **dadurch gekennzeichnet, dass** die Vorrichtung (1) einen schalldämmenden Dämmstoff aufweist, um eine Schallübertragung über die Vorrichtung (1) zu dämmen und dass an der Berstscheibe (12) der Vorrichtung zur Explosionsdruckentlastung auf einer der Flammendurchschlagsicherung (11) zugewandten Seite oder einer der Flammendurchschlagsicherung (11) abgewandten Seite wenigstens eine Schicht (13) aus dem schalldämmenden Dämmstoff angeordnet ist.

9. Vorrichtung (1) nach Anspruch 8, **dadurch gekennzeichnet, dass** der Dämmstoff, zumindest normal entflammbar ist, verformbar oder flexibel ist, eine hohe Beständigkeit gegen Umwelteinflüsse wie zum Beispiel Sonneneinstrahlung oder Wärme hat, wenig oder keine Flüssigkeiten aufnimmt, und/oder geschlossenzellig ist.

10. Vorrichtung (1) nach Anspruch 8 oder 9, **dadurch gekennzeichnet, dass** der Dämmstoff ein PU-Schaum, ein Silikonschaum oder ein Dämmstoff auf EPDM-Basis ist.

11. Vorrichtung (1) nach einem der Ansprüche 8 bis 10, **dadurch gekennzeichnet, dass**, wenn der Dämmstoff auf der der Flammendurchschlagsicherung (11) zugewandten Seite der Berstscheibe (12) angeordnet ist, zwischen einem für die Befestigung der Berstscheibe (12) vorgesehenen Rand der Berstscheibe (12) und der Flammendurchschlagsicherung (11) ein Abstandhalter (14) vorgesehen ist, der zwischen der Berstscheibe (12) und der Flammendurchschlagsicherung (11) einen Abstand einstellt, der im Wesentlichen der Dicke der Schicht (13) oder der Schichten (13) aus dem Dämmstoff entspricht.

12. Vorrichtung (1) nach Anspruch 11, **dadurch gekennzeichnet, dass** der Abstandhalter (14) ein Rahmen ist, der ein nach außen geöffnetes C-förmiges Profil hat.

13. Anordnung aus einem Behälter, einem Gehäuse, einer Einhausung, einer Leitung oder ähnlichem und einer Vorrichtung (1) nach einem der Ansprüche 1 bis 12, **dadurch gekennzeichnet, dass** die Vorrichtung eine Entlastungsöffnung in einer Wand (2) des Behälters, des Gehäuses, der Einhausung, der Leitung oder ähnlichem übergreifend angeordnet ist.
